# EUROPEAN PATENT SPECIFICATION

(11) **EP 0 819 035 B1**
(45) Date of publication and mention of the grant of the patent: **30.10.2002**
(21) Application number: 96909459.8
(22) Date of filing: 04.04.1996
(51) Int. Cl.: B23B 31/16, B23Q 3/00

(54) **GRIPPING DEVICE FOR WORKPIECE**
GREIFVORRICHTUNG FÜR EIN WERKSTÜCK
DISPOSITIF DE BLOCAGE DE PIECE

(30) Priority: 06.04.1995 SE 9501269
(43) Date of publication of application: 21.01.1998
(73) Proprietor: Roplan AB, 147 39 Tumba (SE)
(72) Inventor: BRASKIN, Lovro, S-222 31 Lund (SE)
(74) Representative: Ström, Tore
(86) International application number: SE9600446
(87) International publication number: WO96031308

(56) References cited:
- EP-A- 0 195 184
- WO-A-93/06958
- DE-A- 2 120 010
- US-A- 1 372 726
- US-A- 3 833 232
- US-A- 4 221 391

## Description

### Field of the Invention

The present invention relates to a gripping device according to the preamble of claim 1 and as known for example from WO-A-93/06958.

### Background Art

Spindles of machines with rotating tools and workpieces are, in most cases, provided with conical or cylindrical surfaces to which corresponding surfaces on the gripping devices will fit. Workpieces to be chucked for machining in rotating spindles seldomly have such shapes and dimensions that they can be attached directly to the spindle. An intermediate arrangement is required, one side of which is adjusted to the dimension and shape of the spindle and the other side will fit and enable chucking of the workpieces. The principles for the present invention are applicable to lathes as well as to cutters, and generally to any kind of machine with rotating tools and workpieces. However, in order to simplify the following description the invention will only be described with reference to its applicability to "lathes", it being understood that any other application of the invention is intended to be covered by the present invention.

Chucking of workpieces is generally performed in a self-centering three-jaw chuck, where the simultaneous radial movement of the three jaws may be given by a scroll plate, in which teeth of the jaws are engaged. Other ways to drive is with key action by a rack with helical teeth of each jaw in engagement with similar helical teeth of the jaw, or a simple key with toothed segment in engagement with teeth of the jaws.

The membrane chuck is a chuck with satisfactory centering characteristics where the jaws are mounted on a membrane, which is opened by an axial force effecting the membrane center, whereupon the workpiece is inserted and the force on the membrane is released, resulting in that the jaws close up around the workpiece. For internel chucking the diameter between the jaws is reduced by a pulling force on the membrane.

When demands on the centering accuracy are high and when possibility of repeated chuckings of workpieces are desired, with machinings performed therebetween and with preserved centering, use can be made of the method of drilling centering holes at the ends of the workpiece and to chuck the workpiece between a taper in the spindle and one in the tailstock. In order to transfer torque from the spindle to the workpiece special means are needed. Also, three-jaw chuck arrangements having a tailstock center in the spindle have been used, by which the jaws can center themselfs around the workpiece.

WO-A-93/06958 discloses a device related to top jaws for use on chucks on lathes, milling machines and the like, which jaws, i.e. top jaws, master jaws and base jaws, can be easily and rapidly interchanged without removing the means by which a top jaw is attached to the chuck. A pin is placed through a pin aperture in the top jaw so that one of the angled faces of the pin comes in contact with one flat contact face of a wedge, thereby attaching the top jaw to a base jaw.

However, a drawback of the device in WO-A-93/06958 is that separate attachment means, i.e.the above-mentioned pin and pin aperture, are required for attaching, securing and loosen the top jaw on the base jaw, whereby additional mounting and dismounting procedures are needed.

By using any of the above mentioned chucking methods at machining workpieces made of thin material, problems with ovality of the workpiece can arise, when released after tooling. A shift from producing one product series to another takes a lot of time because the chuck jaws have to be machined between the shifts to adjust and center the actual product to prevent wobble.

Further drawbacks of the chucking methods described above are that a previously machined jaw can not be used with more than one kind of machine having a chuck of a determined size as well as that it is not easy to produce new jaws directly at the plant and that new ones must be bought when needs arise.

### Summary of the Invention

In a plant where many different products are manufactured by means of several machines with rotating tools and workpieces, utilizing prior art chucking arrangement, the jaws of the gripping device have to be machined at every exchange of product or tool to achieve desired centering characteristics. This is not necessary when using the present invention.

Against the background of the prior art, a conventional self-centering chuck with two or more jaws is used in the present invention. The conventional chuck jaws are replaced by jaws of the present invention where, according to claim 1, the gripping device consists of two or more master jaws and a gripping collar divided in two or more gripping collar parts, wherein each master jaw is provided with a centering attachment device, arranged on the front side against the gripping collar part, attached to a corresponding centering recess on the back side against the master jaw of each gripping collar part.

When another product series is to be manufactured, only the gripping collar is exchanged by a gripping collar, specially adjusted for the actual product. This means that when the gripping collar has been manufactured and adjusted for the master jaw neither the gripping collar nor the master jaw has to be machined, when another product is to be manufactured. Each gripping collar can be used with many different machines provided with the same kind of chuck or with machines with different sizes of the chuck, without wobble arising and without machining of the gripping collar therebetween is needed to achieve desired centering characteristics. The invention also means that exchange of gripping collar of the machine to enable manufacturing of a new product series is performed considerably faster than with prior art methods without gripping collars, since the chuck master jaws have to be machined between each exchange.

Further, according to claim 2, the master jaw is provided in a bore located on the front side with a guide pin, projecting a few millimeter and inserted in a corresponding groove arranged on the back side of the gripping collar part. According to claim 3, the gripping collar part i provided with a tapped hole in radial direction from the externel circumferential surface of the gripping collar part to the recess, through which hole a screw is screwed and further screwed through a tapped hole through the attachment device and engages the internel circumferential surface of the recess of the gripping collar part. These further steps resul in that necessary centering characteristics are achieved and that exchange and attachment of the gripping collars become simple.

Compared to prior art, the advantage of the present invention is that when producing another product series, the gripping collars are exchanged with a few simple operations, in that the centering screw, through each gripping collar part, is screwed out. At internel gripping a screw is screwed out also from the attachment device in the master jaw, wherein the gripping collar parts easily can be released and be removed from the master jaw. Another gripping collar, adjusted for the actual product, which ia to be machined, is attached to the master jaw. The centering screw is again fastened, whereby the gripping collar part is centered, all without any machining of the gripping device and only by means of manual power and conventional screwing tools. Gripping collars and master jaws can in contrast to prior art preferably be constructed directly at the plant where they are intended to be used.

Another further advantage with the present invention compared to prior art is that when a workpiece of thin material is gripped and then released no ovalities arise in the workpiece after the machining.

### Brief Description of the Drawings

Reference is made to the drawings in which:
Fig 1 is a perspective view of a known three-jaw chuck, with which a gripping device according to the present invention can be used;
Fig 2 is a bottom view of one of three similar master jaws of the gripping device according to the invention;
Fig 3 is a side view of the master jaw shown in Fig 2;
Fig 4 is a top view of three master jaws according to Fig 2 and Fig 3;
Fig 5 is a cross sectional view of a master jaw along the line V-V of Fig 4;
Fig 6 is a bottom view of a gripping collar according to the invention, for external gripping of workpieces, divided in three parts;
Fig 7 is a cross sectional view of the gripping collar along the line VII-VII in Fig 6 for external gripping of workpieces;
Fig 8 is a bottom view of a gripping collar according to the invention for internal gripping of workpieces, divided in three parts;
Fig 9 is a cross sectional view of the gripping collar along the line IX-IX in Fig 8 for internal gripping of workpieces;
Fig 10 is a cross sectional view of the gripping device according to the invention, illustrating the gripping collar and the master jaw of Fig 8 and Fig 9 for internal gripping of workpieces; and
Fig 11 is a cross sectional view of the gripping device according to the invention, illustrating the gripping collar and the master jaw of Fig 6 and Fig 7 for external gripping of workpieces.

### Description of a Preferred Embodiment

A preferred embodiment of a gripping device for workpieces according to the principles of the present invention is illustrated in the drawings.

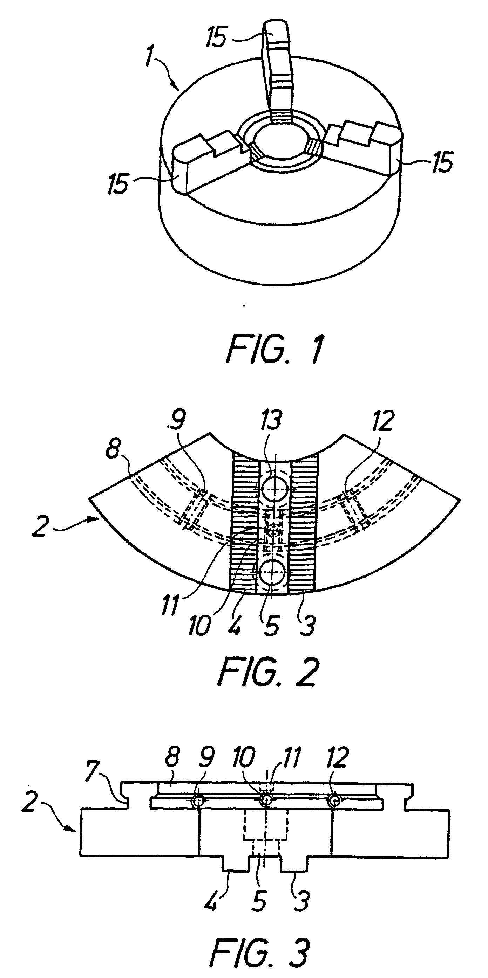

A self-centering three-jaw chuck 1, shown in Fig 1, forms an intermediary between the gripping device according to the invention and a spindle nose on a lathe, and is a device on which the gripping device is attached for gripping. The preferred embodiment comprises three master jaws and a gripping collar divided in three gripping collar parts, but this is not the only way of carrying out the invention. The invention can alternatively comprise two or more master jaws and two or more gripping collar parts, where each master jaw and gripping collar part can have both different size and shape compared to each other.

In order to simplify the following description of the preferred embodiment it will be understood that what is described for an individual master jaw or an individual gripping collar part is also applicable to additional gripping collar parts (one or more) and additional master jaws (one or more), which are included in the present gripping device.

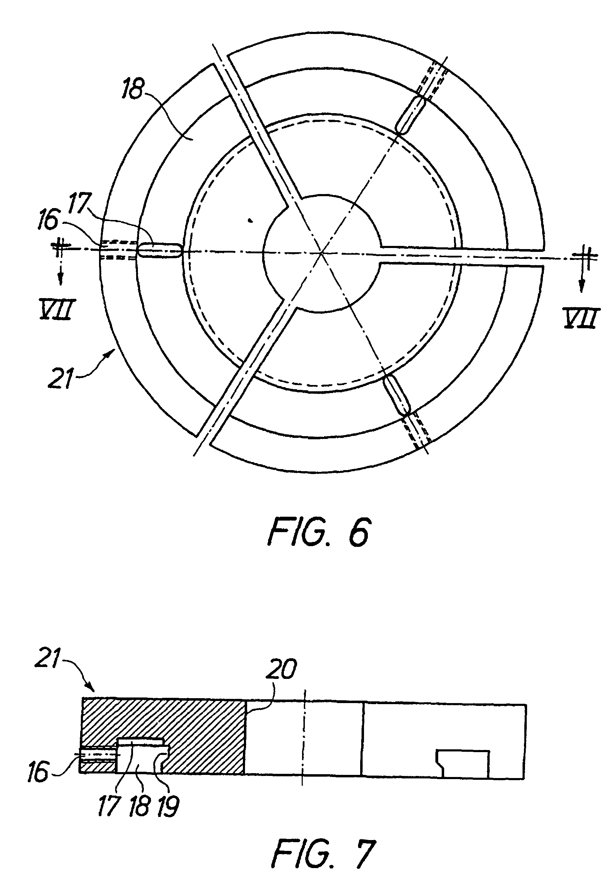

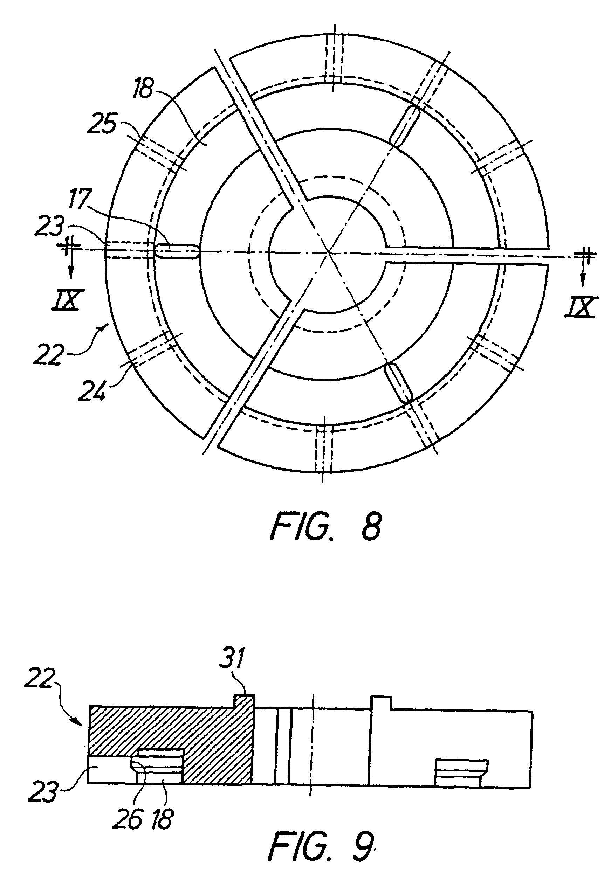

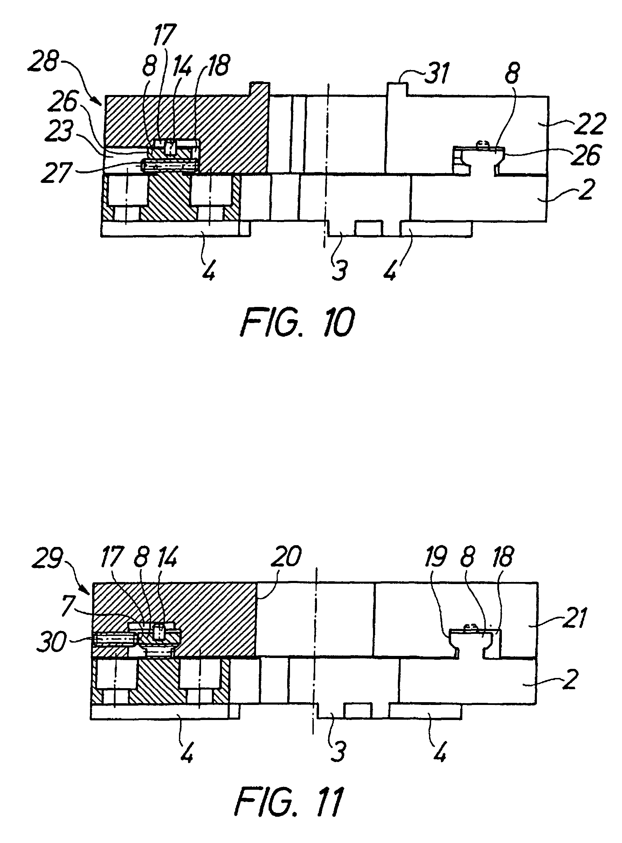

In Fig 10 a gripping device 28 according to the invention is illustrated, comprising a master jaw 2 of Fig 3 and gripping collar parts 22 of Fig 9, for internal gripping of workpieces, and in Fig 11 a gripping device 29 is illustrated, comprising master jaws 2 of Fig 3 and gripping collar parts 21 of Fig 7, for external gripping of workpieces. The master jaw 2 and the gripping collar parts 21 and 22 and the way in which they are assembled into a gripping device 28 and 29, respectively, are described in detail below.

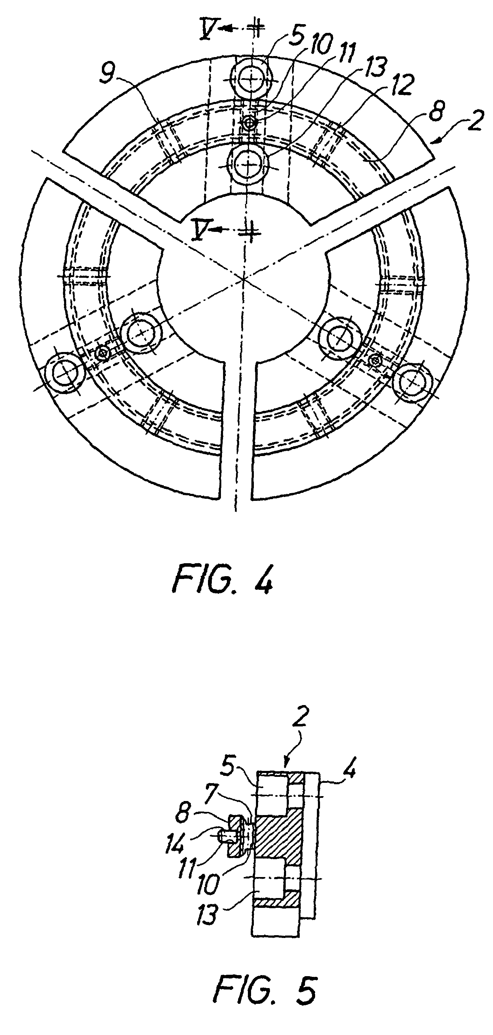

A jaw 15 of the chuck 1 shown in Fig 1 is replaced by the master jaw 2 of the invention. The master jaw 2 is mounted with its back shown in Fig 2 against the chuck to adjust two holes 5 and 13 to corresponding tapped holes in the chuck, to which the master jaw is attached with screws, and toothed, raised ribs 3 and 4 are simultaneously put in close contact with a corresponding surface on the front side of each chuck shown in Fig 4.

The side view in Fig 3 of the master jaw 2 more clearly shows the ribs 3 and 4, which are put in close contact with the front side of the chuck at the attachment by gripping of the master jaw. Further, an attachment device 8, in this embodiment a mushroom profile shaped ring segment with a flat hat, integrated with the master jaw extends along a circle segment in the middle of the front side of each of the master jaws; the attachment device 8 is used for attachment of the gripping collar parts 21 and 22, respectively, for external and internal gripping, respectively, which are shown in two embodiments in Figs 6 and 7, and Figs 8 and 9, respectively. The gripping collar part 22 is kept in a centered position, at internal gripping of workpieces, in relation to the master jaw by means of a screw in a tapped hole 10 through a narrow base of the attachment device 8 of the master jaw. When good centering and high stability are required, especially at internal gripping of workpieces, it can be necessary also to use screws through tapped holes 9 and 12 to keep the gripping collar parts in a centered position. In a bore 11 shown in Fig 4 and 5, respectively, a few mm long guide pin 14 is located with forced fit, which is used to guide the gripping collar part with respect to the master jaw during the radial displacement of the gripping collar part, caused during the centering.

Fig 4 is a top view of three master jaws 2 of Fig 2 and Fig 3, placed in the intended operation positions with respect to each other; Fig 4 shows the side, the top side, at which the master jaws are attached to the gripping collar parts.

Four broken and two unbroken concentric circles illustrate the attachment device 8 used for attachment of the gripping collar parts. At internal gripping of workpieces, especially when high demands on centering are required, screws are used through the tapped holes 9, 10, and 12, where the hole 10 in the preferred embodiment is drilled along a connecting line between the two holes 5 and 13 and the holes 9 and 10 are drilled 30° counter clockwise and 30° clockwise, respectively, with respect to the hole 10 through the narrow base of the attachment device 8.

In the cross sectional view in Fig 5 of the master jaw 2 the guide pin 14 is clearly illustrated, which is placed in the bore 11 to guide the gripping collar parts with respect to the master jaw at its possible radial displacement during the centering procedure. The guide pin 14 is, during gripping, inserted in a groove 17 of the gripping collar parts 21 or 22. The diameter of the guide pin 14 is somewhat smaller than the width of the groove 17. Where the tapped hole for internal gripping of workpieces is drilled in the narrow base of the attachment device 8, is illustrated at 10 in Fig 5.

The gripping collar 21 divided into three parts for external gripping of workpieces is illustrated in Fig 6 in its operational position. The gripping collar part 21 is attached to the master jaw 2 in that the attachment device 8 is inserted in a recess 18, in this embodiment a circular segment groove, in the gripping collar part 21. Both the recess 18 and the attachment device 8 must be constructed with very high accuracy and precision, since these details are vital for the important centering characteristics of the invention and, as mentioned above, also function as the main attachment means between the gripping collar part and the master jaw. At external gripping of workpieces a screw 30, shown in Fig 11, is screwed through a tapped hole 16 in the gripping collar part 21 and will press the attachment device 8 against the inside edge 19 in Fig 7 of the recess 18, resulting in that the gripping collar at each new external gripping of workpieces is fixed in the same centered position.

The gripping collar constituted of three parts for internal gripping of workpieces is illustrated in its operational position at 22 in Fig 8. The gripping collar part 22 is attached to the master jaw 2 in that the attachment device 8 is inserted in the recess 18, in this embodiment a circle segment groove, of the gripping collar part 22. A gap 23 through the gripping collar part 22 acts as an entry for a screw tool to the tapped hole 10 in the attachment device 8, through which a screw 27 is screwed at internal gripping of workpieces. This results in that the external circumferential surface 26 in the recess 18 of the gripping collar part 22 is engaged with the surface on the outer circumference 7 of the attachment device 8. Thereby, the gripping collar is fixed in the same centered position at each new internal gripping of workpieces.

The gripping device 28 according to the invention is illustrated in Fig 10, consists of the master jaws 2 of Fig 3 and the gripping collar parts 22 of Fig 9, for internal gripping of workpieces. The gripping collar part 22 is attached to the master jaw 2 by attaching the attachment device 8 to the recess 18, so that the guide pin 11 is inserted in the guide groove 17. The screw 27 is screwed via hole 23 in the gripping collar part through the tapped hole 10 in the attachment device 8, resulting in that the screw engages the internal circumferential surface of the recess 18. In that way the gripping collar part 22 is pressed against the master jaw 2, whereby the external circumferential surface 26 of the recess 18 will engage the external circumferential surface 7 of the attachment device 8, resulting in the "central" and positive characteristic of the invention that the gripping collar is centered in the same position every time it is attached to the master jaw 2. The workpiece is gripped internally against the projecting flange 31 of the gripping collar part 22. When a series of another product shall be manufactured, the gripping collar parts are exchanged in a few simple operations in that the screw 27 of the gripping collar parts is screwed out. The gripping collar parts 22 may then easily be detached and removed from the master jaws 2, and another gripping collar, adjusted for the particular product to be machined, is attached to the master jaws. The screw 27 is secured again in each gripping collar part, whereby the gripping collar is centered and wobble of the workpiece is prevented, all without any machining of the gripping device and only by means of manual power and conventional screw tools.

The gripping device 29 illustrated in Fig 11 consists of the master jaws 2 of Fig 3 and the gripping collar parts 21 of Fig 7, for external gripping of workpieces. The gripping collar part 21 is attached to the master jaw 2 by attaching the attachment device 8 to the recess 18, so that the guide pin 11 is inserted in the guide groove 17. The screw 30 is screwed through the tapped hole 16 in the gripping collar part, whereby the tip of the screw engages the external circumferential surface 7 of the attachment device 8, resulting in that the gripping collar part 21 is displaced a little bit towards the circumference. In that way the internal circumferential surface 19 of the recess 18 will engage the internal circumferential surface of the master jaw 2. This is resulting in that the gripping collar parts 21 are centered in the same position every time they are attached to the master jaw 2. The workpiece is gripped externally against the surface 20 of the gripping collar parts.

In a plant where many different products are manufactured on machines with rotating tools and workpieces, several hundreds of different gripping collars may be needed, one for each product or group of products. As mentioned above, prior art gripping assemblies need machining of the gripping device at every exchange of product series to achieve desired centering characteristics and to prevent wobble. When using the present invention this is not required, since only the master jaw has to be attached and then the gripping collar is shifted when a new product series will be produced. Each gripping collar may be used on several different machines with the same kind of chuck or on machines with different sizes of the chuck, without causing wobble.

The present invention also means that a shift of the gripping collar at a machine to produce a new product occurs considerably faster than a shift of product series with prior art methods without gripping collars, when the jaws of the chuck have to be machined between each shift of product series.

Using the gripping device according to the invention does not lead to ovality of the working piece, when released after machining.

The master jaws 2 and the gripping collars 21 and 22, respectively, may preferably be produced at a plant where they are to be used.

## Claims

1. A gripping device for gripping a workpiece or a tool at a machine with rotating spindle, wherein the gripping device comprises two or more master jaws (2),
**characterized in that** the gripping device further comprises a gripping collar divided in two or more gripping collar parts (21 or 22), wherein each master jaw is provided with a centering attachment device (8), arranged on the front side against the gripping collar part, attached to a corresponding centering recess (18) arranged on the back side against the master jaw of each gripping collar part (21 or 22).

2. A gripping device according to claim 1, **characterized in that** the master jaw (2) is provided in a bore (11) located on the front side against the gripping collar with a guide pin (14), projecing a few millimeter and inserted in a corresponding groove (17) arranged at the back side against the master jaw of the gripping collar part (21 or 22).

3. A gripping device according to claim 1 or 2, **characterized in that** the gripping collar part (22) is provided with a tapped hole (23) in radial direction from the external circumferential surface of the gripping collar part to the recess (18), through which hole a screw (27) is screwed and further screwed through a tapped hole (10) through the attachment device (8) and engages the internal circumferential surface of the recess (18).

4. A gripping device according to claim 1 or 2, **characterized in that** the gripping collar part (21) is provided with a tapped hole (16) in radial direction from the external circumferential surface of the gripping collar part to the recess (18), through which hole a screw (30) is screwed and engages the attachment device (8) of the master jaw (2).

5. A gripping device according to claim 3, **characterized in that** the gripping collar part (22) is provided with several tapped holes (23, 24, 25) spaced in the radial direction from the external circumferential surface of the gripping collar parts towards the recess (18), through which holes the screws (27) are screwed and further screwed through holes (9, 10, 12) through the attachment device (8) and engages the internal circumferential surface of the recess (18).

## Patentansprüche

1. Eine Spannbackenvorrichtung zum Einspannen eines Arbeitsstückes oder eines Werkzeuges in einer Maschine mit rotierender Spindel, wobei die Spannbackenvorrichtung zwei oder mehr Hauptbacken (2) umfasst, **dadurch gekennzeichnet, daß** die Spannbackenvorrichtung desweiteren einen Spannkragen umfasst, der in zwei oder mehr Spannkragenteile (21 oder 22) unterteilt ist, wobei jede Hauptbacke mit einer Zentrierhaltevorrichtung (8) versehen ist, welche an der Vorderseite zum Spannkragenteil hin angeordnet ist und an einer entsprechenden Zentriervertiefung (18), die auf der Rückseite hin zur Hauptbacke jedes Spannkragenteils (21 oder 22) angeordnet ist, befestigt ist.

2. Eine Spannbackenvorrichtung gemäß Anspruch 1, **dadurch gekennzeichnet, daß** die Hauptbacke (2) in einer Bohrung (11), die sich an der Vorderseite zum Spannkragen hin befindet, mit einem Führungsstift (14) versehen ist, der einige Millimeter vorsteht und in eine entsprechende Nut (17) eingesteckt ist, wobei die Nut an der Rückseite zur Hauptbacke des Spannkragenteils (21 oder 22) hin angeordnet ist.

3. Eine Spannbackenvorrichtung gemäß Anspruch 1 oder 2, **dadurch gekennzeichnet, daß** das Spannkragenteil (22) mit einem mit Gewinde versehenen Bohrloch (23) in radialer Richtung von der äußeren Umfangsfläche des Spannkragenteils zur Vertiefung (18) hin versehen ist, wobei durch das Bohrloch eine Schraube (27) geschraubt ist und diese weiter durch ein mit Gewinde versehenes Bohrloch (7) durch die Haltevorrichtung (8) geschraubt ist und in die innere Umfangsfläche der Vertiefung (18) eingreift.

4. Eine Spannbackenvorrichtung gemäß Anspruch 1 oder 2, **dadurch gekennzeichnet, daß** das Spannkragenteil (21) mit einem mit Gewinde versehenen Bohrloch (16) in radialer Richtung von der äußeren Umfangsfläche des Spannkragensteils zur Vertiefung (18) hin versehen ist, wobei durch das Bohrloch eine Schraube (30) geschraubt ist und in die Haltevorrichtung (8) des Hauptbackens (2) eingreift.

5. Eine Spannbackenvorrichtung gemäß Anspruch 3, **dadurch gekennzeichnet, daß** das Spannkragenteil (22) mit mehreren mit Gewinde versehenen Bohrlöchern (23, 24, 25) mit Zwischenräumen in der Radialrichtung von der äußeren Umfangsfläche des Spannkragenteils hin zur Vertiefung (18) versehen ist, wobei durch die Bohrlöcher die Schrauben (27) geschraubt sind und weiter durch die Bohrlöcher (9, 10, 12) durch die Haltevorrichtung (8) geschraubt sind und in die innere Umfangsfläche der Vertiefung (18) eingreifen.

## Revendications

1. Dispositif de serrage destiné à monter une pièce de fabrication ou un outil sur une machine avec un arbre rotatif, dans lequel le dispositif de serrage comprend deux ou plusieurs mâchoires principales (2) **caractérisé en ce que** le dispositif de serrage comprend en outre un collier de serrage divisé en deux ou plusieurs parties de collier de serrage (21 ou 22), dans lequel chaque mâchoire principale est proposée avec un dispositif d'attache de centrage (8) agencé sur le côté avant contre la partie de collier de serrage, fixé à une gorge de centrage correspondante (18) agencée sur le côté arrière contre la mâchoire principale de chaque partie de collier de serrage (21 ou 22).

2. Dispositif de serrage selon la revendication 1, **caractérisé en ce que** la mâchoire principale (2) est proposée dans un alésage (11) situé sur le côté avant contre le collier de serrage avec une colonne de guidage (14), faisant saillie de quelques millimètres et insérée dans une rainure correspondante (17) agencée sur le côté arrière contre la mâchoire principale de la partie de collier de serrage (21 ou 22).

3. Dispositif de serrage selon la revendication 1 ou 2, **caractérisé en ce que** la partie de collier de serrage (22) est proposée avec un trou taraudé (23) dans une direction radiale depuis la surface périphérique extérieure de la partie de collier de serrage vers la gorge (18), au travers duquel une vis (27) est vissée et ultérieurement vissée à travers un trou taraudé (10) à travers le dispositif d'attache (8) et met en prise la surface périphérique intérieure de la gorge (18).

4. Dispositif de serrage selon la revendication 1 ou 2 **caractérisé en ce que** la partie de collier de serrage (21) est proposée avec un trou taraudé (16) dans la direction radiale depuis la surface périphérique extérieure de la partie de collier de serrage vers la gorge (18), au travers duquel une vis (30) est vissée et met en prise le dispositif d'attache (8) de la mâchoire principale (2).

5. Dispositif de serrage selon la revendication 3 **caractérisé en ce que** la partie de collier de serrage (22) est proposée avec plusieurs trous taraudés (23, 24, 25) espacés dans la direction radiale depuis la surface périphérique extérieure des parties du collier de serrage vers la gorge (18), à travers lesquels trous les vis (27) sont vissées et ultérieurement vissées à travers les trous (9, 10, 12), au travers desquels le dispositif d'attache (8) et met en prise la surface périphérique intérieure de la gorge (18).
